# EUROPEAN PATENT APPLICATION

(11) **EP 4 443 597 A1**
(43) Date of publication of application: **09.10.2024**
(21) Application number: 22944324.7
(22) Date of filing: 02.06.2022
(51) Int. Cl.: H01M 10/42, B60L 58/22, B60L 50/60, H02J 7/00

(54) **BATTERY REGULATION SYSTEM, METHOD AND ELECTRIC APPARATUS USING SAME**

(71) Applicant: Contemporary Amperex Technology (Hong Kong) Limited, Central, Central And Western District (HK)
(72) Inventor: ZHANG, Chengui, Ningde, Fujian 352100 (CN); WANG, Tiansheng, Ningde, Fujian 352100 (CN); WANG, Shengwei, Ningde, Fujian 352100 (CN); CHEN, Jianli, Ningde, Fujian 352100 (CN)
(74) Representative: Holt, Lucy Rose
(86) International application number: PCT/CN2022/096874
(87) International publication number: WO 2023/230995

(57) **Abstract**

Disclosed in the present application are a battery regulation system, a method and an electric apparatus using same. The battery regulation system is applied to a vehicle comprising a first motor and a second motor. The battery regulation system comprises a battery module, a regulation module and a control module. The regulation module is electrically connected to the battery module and the control module; the battery module comprises a first battery and a second battery, the first battery and the second battery being connected in series, the first battery being used for supplying power to the first motor, and the second battery being used for supplying power to the second motor; the control module is used for controlling the regulation module to regulate the state of charge (SOC) of the first battery and the SOC the second battery when the SOCs of the first battery and the second battery are inconsistent, so that the SOCs of the two batteries are kept consistent or the difference is small, thus allowing the battery module to fully complete power output or basically reach a full charge state, and prolonging the battery life of the battery module.

## Description

### TECHNICAL FIELD

The present application relates to the technical field of new energy vehicles, and specifically to a battery regulation system and method and an electrical device thereof.

### BACKGROUND

At present, new energy four-wheel drive vehicles can be driven by high-voltage battery systems, so as to improve the speed of fast charging and reduce the operating current and heat generation.

However, the electronic components of the high-voltage battery system are not mature at present. In order to adopt the high-voltage battery system for driving, the current conventional solution is to form a high-voltage battery system (e.g., an 800V battery system) using two battery modules (e.g., two 400V batteries), and the two battery modules supply power to the front and rear motors, respectively, thereby achieving driving using the high-voltage battery system.

However, since the powers of the front and rear motors or the control logics of the front and rear motors are not consistent, the above solution easily leads to a large difference in the states of charge of the two battery modules, which causes the formed high-voltage battery system to be unable to be fully charged and discharged, thus greatly reducing the range of the high-voltage battery system.

### SUMMARY OF THE INVENTION

In view of the above problem, the present application provides a battery regulation system and method and an electrical device thereof, which are capable of solving the problem of the low range of a high-voltage battery system caused by inconsistent states of charge of two battery modules in the currently combined high-voltage battery system.

In a first aspect, the present application provides a battery regulation system. The battery regulation system is applied to an electrical device comprising a first motor and a second motor; and the battery regulation system comprises a battery module, a regulation module, and a control module, wherein the regulation module is electrically connected to the battery module and the control module; the battery module comprises a first battery and a second battery, the first battery and the second battery being connected in series, wherein the first battery is used for powering the first motor and the second battery is used for powering the second motor; and the control module is used for controlling the regulation module to regulate the states of charge of the first battery and the second battery when the states of charge of the first battery and the second battery are not consistent.

In the technical solution of embodiments of the present application, this solution designs a battery module, a regulation module, and a control module, wherein the control module controls the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the battery module.

In some embodiments, a second end of the first battery and a first end of the second battery form a series connection end; the regulation module comprises a first input port, a second input port, a third input port, a first output port, a second output port, and a third output port; the first input port and the first output port of the regulation module are connected to a first end of the first battery, the second input port and the second output port of the regulation module are connected to the series connection end, and the third input port and the third output port of the regulation module are connected to a second end of the second battery; and the control module is specifically used for controlling the regulation module to regulate power of a battery of which the state of charge is higher and then transmit it to a battery of which the state of charge is lower when the states of charge of the first battery and the second battery are not consistent. Embodiments of the present application design the first input port and the first output port of the regulation module to be connected to the first end of the first battery, the second input port and the second output port of the regulation module to be connected to the series connection end, and the third input port and the third output port of the regulation module to be connected to the second end of the second battery, so that the designed regulation module can, under the control of the control module, regulate power of a battery of which the state of charge is higher and then transmit it to a battery of which the state of charge is lower.

In some embodiments, the regulation module comprises a DC-AC conversion circuit, a voltage transformation coupling circuit, and an AC-DC conversion circuit, the control module being electrically connected to the DC-AC conversion circuit; the control module is used for transmitting a modulation signal to the DC-AC conversion circuit when the states of charge of the first battery and the second battery are not consistent, and controlling the battery of which the state of charge is higher to transmit a DC current to the DC-AC conversion circuit; the DC-AC conversion circuit is used for converting the received DC current into a corresponding AC current according to the modulation signal and transmitting the converted AC current to the voltage transformation coupling circuit; the voltage transformation coupling circuit is used for transmitting the converted AC current to the AC-DC conversion circuit by means of electromagnetic induction; and the AC-DC conversion circuit is used for converting the AC current transmitted by the voltage transformation coupling circuit into a corresponding DC current to obtain the converted DC current, so as to regulate the battery of which the state of charge is lower using the converted DC current. Embodiments of the present application design the DC-AC conversion circuit, the voltage transformation coupling circuit, and the AC-DC conversion circuit to form the regulation module, so that the regulation module uses the electromagnetic induction principle for energy transfer, thereby preventing the insulation problem from occurring in the first battery and the second battery.

In some embodiments, the regulation module further comprises a first switching circuit and a second switching circuit, the control module being electrically connected separately to the first switching circuit and the second switching circuit; the control module is used for, when the states of charge of the first battery and the second battery are not consistent, controlling the first switching circuit to close so as to control the battery of which the state of charge is higher to transmit a DC current to the DC-AC conversion circuit; and controlling the second switching circuit to close so as to transmit the converted DC current to the battery of which the state of charge is lower to regulate the battery of which the state of charge is lower. Embodiments of the present application design the first switching circuit and the second switching circuit to achieve the control of the flow direction of electrical energy transmission, so that the control of transmitting energy from the battery of which the state of charge is higher to the battery of which the state of charge is lower can be achieved by a simple design.

In some embodiments, the first switching circuit comprises a first switch, a second switch, a third switch, and a fourth switch; and the second switching module comprises a fifth switch, a sixth switch, a seventh switch, and an eighth switch, each switch being electrically connected to the control module; the first input port is connected to a first input end of the AC-DC conversion circuit via the first switch, the second input port is connected to a first input end of the DC-AC conversion circuit via the second switch and connected to a second input end of the DC-AC conversion circuit via the third switch, and the third input port is connected to the second input end of the DC-AC conversion circuit via the fourth switch; an output end of the DC-AC conversion circuit is connected to one side of the voltage transformation coupling circuit, and the other side of the voltage transformation coupling circuit is connected to the AC-DC conversion circuit; and a first output end of the AC-DC conversion circuit is connected to the first output port via the fifth switch, and the first output end of the AC-DC conversion circuit is connected to the second output port via the sixth switch, a second output end of the AC-DC conversion circuit is connected to the second output port via the seventh switch, and the second output end of the AC-DC conversion circuit is connected to the third output port via the eighth switch.

In some embodiments, the regulation module further comprises a first diode and a second diode, the first switch is connected to the positive terminal of the first diode, and the first input end of the DC-AC conversion circuit is connected to the negative terminal of the first diode; and the fourth switch is connected to the negative terminal of the second diode, and the second input end of the DC-AC conversion circuit is connected to the positive terminal of the second diode. In this embodiment, this solution designs the diodes in the first switch and the fourth switch so as to prevent the current from flowing in the wrong direction during the DC to AC conversion process, thus improving the accuracy of the DC to AC conversion and preventing the current from flowing back.

In some embodiments, a second end of the first battery and a first end of the second battery form a series connection end; the regulation module comprises a first input port, a second input port, a first output port, a second output port, and a third output port; the first input port and the first output port are connected to a first end of the first battery, the second input port and the third output port are connected to a second end of the second battery, and the second output port is connected to the series connection end; and the control module is specifically used for controlling the regulation module to regulate power of the battery module and then transmit it to a battery of which the state of charge is lower when the states of charge of the first battery and the second battery are not consistent. Embodiments of the present application design the first input port and the first output port of the regulation module to be connected to the first end of the first battery, the second input port and the third output port of the regulation module to be connected to the second end of the second battery, and the third output port of the regulation module to be connected to the series connection end, so that the designed regulation module can, under the control of the control module, regulate the overall electrical energy of the battery module and then transmit it to a battery of which the state of charge is lower, thus causing the states of charge of the first battery and the second battery tend to be consistent or to have a difference within a preset range.

In some embodiments, the regulation module comprises a DC-AC conversion circuit, a voltage transformation coupling circuit, and an AC-DC conversion circuit, the control module being electrically connected to the DC-AC conversion circuit; the control module is used for transmitting a modulation signal to the DC-AC conversion circuit when the states of charge of the first battery and the second battery are not consistent, and controlling the battery module to transmit a DC current to the DC-AC conversion circuit; the DC-AC conversion circuit is used for converting the received DC current into a corresponding AC current according to the modulation signal and transmitting the converted AC current to the voltage transformation coupling circuit; the voltage transformation coupling circuit is used for transmitting the converted AC current to the AC-DC conversion circuit by means of electromagnetic induction; and the AC-DC conversion circuit is used for converting the AC current transmitted by the voltage transformation coupling circuit into a corresponding DC current to obtain the converted DC current, so as to regulate the battery of which the state of charge is lower using the converted DC current.

In some embodiments, the regulation module further comprises a first switching circuit and a second switching circuit, the control module being electrically connected separately to the first switching circuit and the second switching circuit; the control module is used for, when the states of charge of the first battery and the second battery are not consistent, controlling the first switching circuit to close so as to control the battery module to transmit a DC current to the DC-AC conversion circuit; and controlling the second switching circuit to close so as to transmit the converted DC current to the battery of which the state of charge is lower to regulate the battery of which the state of charge is lower.

In some embodiments, the first switching circuit comprises a first switch and a second switch; and the second switching circuit comprises a third switch, a fourth switch, a fifth switch, and a sixth switch, each switch being electrically connected to the control module; the first input port is connected to a first input end of the DC-AC conversion circuit via the first switch, and the second input port is connected to a second input end of the DC-AC conversion circuit via the second switch; an output end of the DC-AC conversion circuit is connected to one side of the voltage transformation coupling circuit, and the other side of the voltage transformation coupling circuit is connected to the AC-DC conversion circuit; and a first output end of the AC-DC conversion circuit is connected to the first output port via the third switch, and the first output end of the AC-DC conversion circuit is connected to the second output port via the fourth switch, a second output end of the AC-DC conversion circuit is connected to the second output port via the fifth switch, and the second output end of the AC-DC conversion circuit is connected to the third output port via the sixth switch.

In the second aspect, the present application provides a vehicle power system, the vehicle power system comprising a first motor, a second motor, and a battery regulation system as described in any of the optional implementations in the first aspect, wherein the first motor is electrically connected to the first battery and the second motor is electrically connected to the second battery.

In the technical solution of embodiments of the present application, this solution designs a battery module, a regulation module, and a control module to form a battery regulation system of this power system, wherein the control module can control the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the vehicle power system.

In a third aspect, the present application provides an electrical device comprising a vehicle, the vehicle comprising the battery regulation system described in any of the optional implementations in the first aspect.

In the technical solution of embodiments of the present application, the vehicle designed above comprises a vehicle power system with a battery regulation system, wherein a control module in the battery regulation system can control the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the vehicle.

In the fourth aspect, the present application provides a battery regulation method. The battery regulation method is applied to a battery regulation system; and the battery regulation system comprises a battery module, a regulation module, and a control module, wherein the regulation module is electrically connected to the battery module and the control module; the battery module comprises a first battery and a second battery, the first battery and the second battery being connected in series, wherein the first battery is used for powering the first motor and the second battery is used for powering the second motor; and the method is executed by the control module, comprising: controlling the regulation module to regulate the states of charge of the first battery and the second battery when the states of charge of the first battery and the second battery are not consistent.

In the technical solution of embodiments of the present application, this solution controls the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the vehicle.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

Various other advantages and benefits will become apparent to those of ordinary skill in the art upon reading the following detailed description of the preferred implementations. The drawings are for the purpose of illustrating the preferred implementations only and are not to be considered a limitation to the present application. Moreover, in all of the accompanying drawings, the same parts are indicated by the same reference numerals. In the accompanying drawings:
Fig. 1 is a first structural schematic diagram of a battery regulation system provided in the present application;
Fig. 2 is a second structural schematic diagram of a battery regulation system provided in the present application;
Fig. 3 is a first structural schematic diagram of a regulation module provided in the present application;
Fig. 4 is a second structural schematic diagram of a regulation module provided in the present application;
Fig. 5 is a third structural schematic diagram of a regulation module provided in the present application;
Fig. 6 is a fourth structural schematic diagram of a regulation module provided in the present application;
Fig. 7 is a third structural schematic diagram of a battery regulation system provided in the present application;
Fig. 8 is a fifth structural schematic diagram of a regulation module provided in the present application;
Fig. 9 is a sixth structural schematic diagram of a regulation module provided in the present application;
Fig. 10 is a first structural schematic diagram of a vehicle power system provided in the present application;
Fig. 11 is a second structural schematic diagram of a vehicle power system provided in the present application;
Fig. 12 is a structural schematic diagram of a vehicle provided in the present application; and
Fig. 13 is a schematic flow chart of a battery regulation method provided in the present application.

### Reference numerals in Detailed Description are as follows:

1 - battery regulation system; 10 - battery module; 110 - first battery; 120 - second battery; 20 - regulation module; 210 - DC-AC conversion circuit; 220 - voltage transformation coupling circuit; 230 - AC-DC conversion circuit; 30 - control module; A1 - series connection end; In 1 - first input port of regulation module; In2 - second input port of regulation module; In3 - third input port of regulation module; Out1 - first output port of regulation module; Out2 - second output port of regulation module; Out3 - third output port of regulation module; Q1 - first insulated gate bipolar transistor; Q2 - second insulated gate bipolar transistor; Q3 - third insulated gate bipolar transistor; Q4 - fourth insulated gate bipolar transistor; 240 - first switching circuit; 250 - second switching circuit; 260 - filter circuit; S 1 - first switch; S2 - second switch; S3 - third switch; S4 - fourth switch; S5 - fifth switch; S6 - sixth switch; S7 - seventh switch; S8 - eighth switch; D1 - first diode; D2 - second diode; M1 - first motor; and M2 - second motor.

### DETAILED DESCRIPTION

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, batteries are more and more widely used. The batteries are used in energy storage power source systems such as hydraulic, thermal, wind and solar power stations as well as in electric vehicles such as electric bicycles, electric motorcycles and electric cars, and military equipment and aerospace fields. With continuous expansion of the application fields of batteries, the market demand is also constantly expanding.

With the development of battery technologies, batteries have been applied in the field of electric vehicles. Currently, electric four-wheel drive vehicles can be classified into two driving approaches, one is driven by a low-voltage battery system (for example, driven by a 400V battery system); and the other is driven by a high-voltage battery system (for example, driven by an 800V battery system).

All the electronic devices of the low-voltage battery system are mature currently, so the low-voltage battery system is the commonly used driving approach at present. However, during the application of the low-voltage battery system, defects of the low-voltage battery system are found, such as a high charging current, difficulty in improving the speed of fast charging, and high operating current and thus high heat generation.

Compared with the low-voltage battery system, the high-voltage battery system can improve the speed of fast charging, and reduce the operating current and heat generation. Therefore, the development of the high-voltage battery system has become the main trend, but the electronic components in the high-voltage battery system are not mature at the moment. In order to realize the high-voltage battery system driving approach, in the current solution, a high-voltage battery system (e.g., an 800V battery system) is formed by means of connection of two battery modules (e.g., 400V battery modules), in which the two battery modules can respectively drive one motor in the four-wheel drive vehicle to realize driving the four-wheel drive vehicle, so that 800V can be used for fast charging, thereby realizing fast charging and providing an advantage of low heat generation due to low operating current.

On the basis of the above situation, the present inventors note that the difference of the power or control strategy of the front-wheel drive motor and the rear-wheel drive motor of the four-wheel drive vehicle can easily lead to a large difference in the State of Charge (SOC) of the two battery modules, which results in the following situations for the entire high-voltage battery system: during power output, one of the two battery modules reaches the discharge cutoff state first, thus causing the high-voltage battery system to be unable to fully complete power outputting; and during charging, one of the two battery modules reaches the charge cutoff state first, thus causing the high-voltage battery system to be unable to achieve full charging of the battery.

The inventors found through their research that a regulation module can be designed for regulating the states of charge (SOCs) of two battery cells in a battery pack when their SOCs are not consistent, thus solving the above problem.

After thorough research, the inventors have designed a battery regulation system and method and an electrical device thereof, which can regulate the states of charge (SOCs) of two batteries when their SOCs are not consistent, so that the SOCs of the two batteries remain consistent or differ within a certain degree, thus enabling the battery pack to fully complete power outputting or substantially achieve the fully charged state, thereby improving the range of the battery pack.

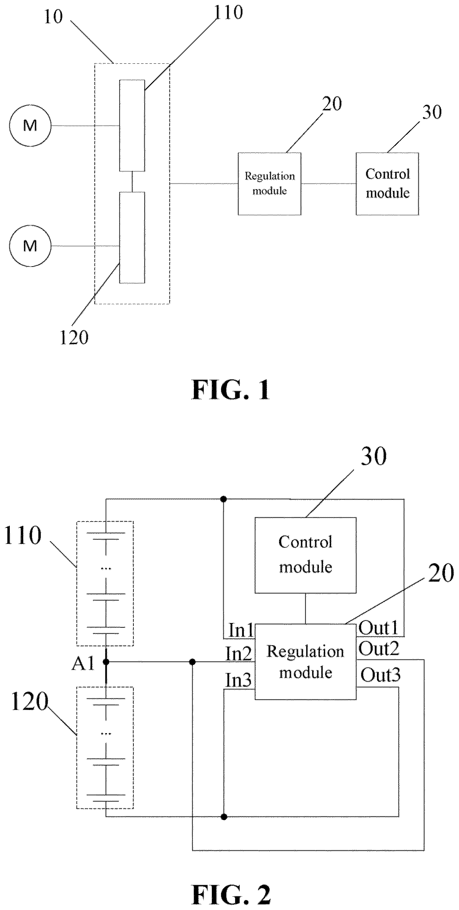

The present application provides a battery regulation system, as shown in Fig. 1, which comprises a battery module 10, a regulation module 20, and a control module 30, the regulation module 20 being electrically connected separately to the battery module 10 and the control module 30.

The battery module 10 may include a first battery 110 and a second battery 120, the first battery 110 and the second battery 120 being connected in series. As a possible implementation, the negative electrode of the first battery 110 may be connected in series with the positive electrode of the second battery 120 to form the battery module 10; as another possible implementation, the positive electrode of the first battery 110 may be connected in series with the negative electrode of the second battery 120 to form the battery module 10. Among them, each battery may be constituted by a plurality of battery cells connected in series.

In the application of the battery regulation system designed above, the first battery 110 and the second battery 120 can separately power different motors, for example, the first battery 110 can power a first motor M1 and the second battery 120 can power a second motor M2, where the output power of these two motors can be different.

On the above basis, for the control module 30, when the states of charge of the first battery 110 and the second battery 120 are not consistent, the control module 30 can send a control signal to the regulation module 20, thereby controlling the regulation module 20 to regulate the states of charge of the first battery 110 and the second battery 120, so that the states of charge of the first battery 110 and the second battery 120 are consistent, or so that the difference between the states of charge of the first battery 110 and the second battery 120 is maintained within a preset range, thus ensuring that the battery system can be fully charged or discharged, thereby improving the range of the battery pack. Among them, the regulation module 20 can transmit power of a battery of which the state of charge is higher among the first battery 110 and the second battery 120 to a battery of which the state of charge is lower, so as to perform regulation; or the regulation module can transmit power of the battery module 10 to the battery of which the state of charge is lower, so as to perform regulation.

As a possible implementation, the control module 30 may be a battery management system (BMS), on which basis, the control module 30 can be electrically connected separately to the first battery 110 and the second battery 120, and the control module 30 can collect the states of charge of the first battery 110 and the second battery 120, so as to judge whether the states of charge of the first battery 110 and the second battery 120 are consistent by comparing the states of charge of the first battery 110 and the second battery. For example, the control module 30 can judge that the states of charge of the first battery 110 and the second battery 120 are not consistent when the states of charge of the first battery 110 and the second battery 120 are not equal; for another example, the control module 30 can calculate the difference between the states of charge of the first battery 110 and the second battery 120, and judge that the states of charge of the first battery 110 and the second battery 120 are not consistent when the difference between the states of charge is greater than a preset threshold.

Similarly, after the control module 30 regulates the states of charge of the first battery 110 and the second battery 120 by the regulation module 20, the control module 30 can collect the states of charge of the first battery 110 and the second battery 120 in real time, and can then judge whether the states of charge of the first battery 110 and the second battery 120 satisfy the requirement based on the states of charge of the first battery 110 and the second battery 120 collected in real time, and if the requirement is satisfied, the control module 30 can send a cutoff signal to the regulation module 20 to control the regulation module 20 to end the regulation of the states of charge of the first battery 110 and the second battery 120.

As another possible implementation, this control module 30 may be a controller, on which basis, the battery management system (BMS) can collect the states of charge of the first battery 110 and the second battery 120 and then send them to the control module 30 for judgment, and the control module 30 sends a control signal when judging that the states of charge of the first battery 110 and the second battery 120 are not consistent. It is noted here that the judgment process may also be performed by the BMS, and the BMS sends a regulation transmission signal to the control module 30 when it judges that the states of charge are not consistent, so that the control module 30 sends the control signal to the regulation module 20 based on the regulation transmission signal.

In the battery regulation system designed above, this solution designs a battery module, a regulation module, and a control module, wherein the control module controls the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the battery module.

According to some embodiments of the present application, as previously described, the control module 30 can transmit power of a battery of which the state of charge is higher among the first battery 110 and the second battery 120 to a battery of which the state of charge is lower, thus realizing SOC regulation, on which basis, as shown in Fig. 2, the regulation module 20 designed in this solution may include the first input port In1, the second input port In2, the third input port In3, the first output port Out1, the second output port Out2, and the third output port Out3, and the second end (negative electrode) of the first battery 110 is connected to the first end (positive electrode) of the second battery to form a series connection end A1.

Referring to Fig. 2, the first input port In1 and the first output port Out1 of the regulation module 20 are connected to the first end (positive electrode) of the first battery 110, the second input port In2 and the second output port Out2 of the regulation module 20 are connected to the series connection end A1, and the third input port In3 and the third output port Out3 of the regulation module 20 are connected to the second end (negative electrode) of the second battery 120.

The regulation module 20 of the above structure can, under the control of the control module 30, regulate the power of the battery of which the state of charge is higher and then transmit it to the battery of which the state of charge is lower.

For example, in accordance with the structure shown in Fig. 2, when the state of charge of the first battery 110 is higher compared to the state of charge of the second battery 120, the control module 30 controls the first input port In1, the second input port In2, the second output port Out2, and the third output port Out3 of the regulation module 20 to be on, so that the power of the first battery 110 is transmitted to the regulation module 20 through the first input port In1 and the second input port In2 for adjustment and conversion and then transmitted to the second battery 120 through the second output port Out2 and the third output port Out3, so that the state of charge of the first battery 110 gradually decreases and the state of charge of the second battery 120 gradually increases, thus causing the states of charge of the first battery 110 and the second battery 120 tend to be consistent or to have a difference within a preset range, so as to complete the regulation.

For another example, in accordance with the structure shown in Fig. 2, when the state of charge of the first battery 110 is lower compared to the state of charge of the second battery 120, the control module 30 can control the second input port In2, the third input port In3, the first output port Out1, and the second output port Out2 of the regulation module 20 to be on, so that the power of the second battery 120 is transmitted to the regulation module 20 through the second input port In2 and the third input port In3 for adjustment and conversion and then transmitted to the first battery 110 through the first output port Out1 and the second output port Out2, so that the state of charge of the first battery 110 gradually increases and the state of charge of the second battery 120 gradually decreases, thus causing the states of charge of the first battery 110 and the second battery 120 tend to be consistent or to have a difference within a preset range, so as to complete the regulation.

Embodiments of the present application design the first input port and the first output port of the regulation module to be connected to the first end of the first battery, the second input port and the second output port of the regulation module to be connected to the series connection end, and the third input port and the third output port of the regulation module to be connected to the second end of the second battery, so that the designed regulation module can, under the control of the control module, regulate power of a battery of which the state of charge is higher and then transmit it to a battery of which the state of charge is lower.

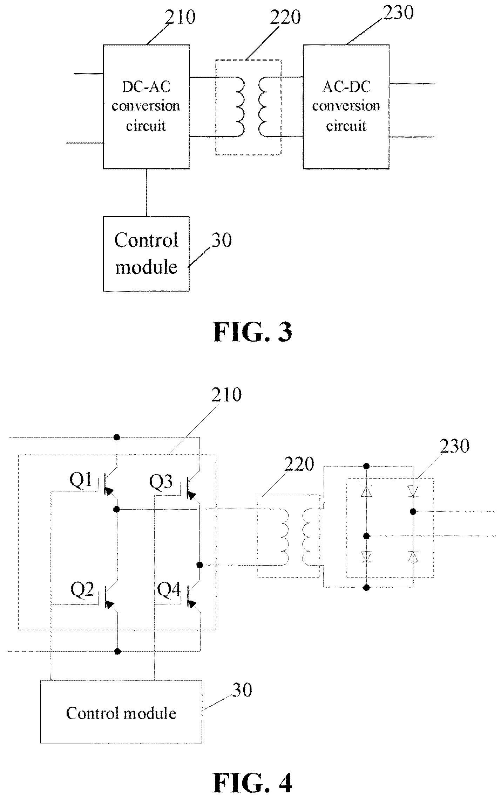

According to some embodiments of the present application, in order to avoid the insulation problem of the first battery 110 and the second battery 120, the regulation module 20 of this solution may use the electromagnetic induction principle for energy transfer. Specifically, as shown in Fig. 3, the regulation module 20 may also include a DC-AC conversion circuit 210, a voltage transformation coupling circuit 220, and an AC-DC conversion circuit 230, wherein the control module 30 is electrically connected to the DC-AC conversion circuit 210, and this DC-AC conversion circuit 210 is connected to one side of the voltage transformation coupling circuit 220, and the other side of the voltage transformation coupling circuit 220 to the AC-DC conversion circuit 230.

The regulation module 20 and the control module 30 designed above can send a modulation signal to this DC-AC conversion circuit 210 when the states of charge of the first battery and the second battery are not consistent, and control the battery of which the state of charge is higher to transmit a DC current to the DC-AC conversion circuit 210. In particular, the modulation signal may be a PWM signal.

The DC-AC conversion circuit 210 converts the received DC current into an AC current according to the PWM signal, and transmits the converted AC current to the voltage transformation coupling circuit 220, and the voltage transformation coupling circuit 220 transmits the AC current to the other side by means of the electromagnetic induction principle, thereby transmitting the AC current to the AC-DC conversion circuit 230, and the AC-DC conversion circuit 230 converts the received AC current into the corresponding DC current to obtain the converted DC current, and then transmits the converted DC current to the battery of which the state of charge is lower so as to realize the regulation process.

Specifically, as shown in Fig. 4, the DC-AC conversion circuit 210 may include a first insulated gate bipolar transistor Q1, a second insulated gate bipolar transistor Q2, a third insulated gate bipolar transistor Q4, and a fourth insulated gate bipolar transistor Q4, the four insulated gate bipolar transistor (IGBTs) being built to form an H-bridge. The control module 30 can control Q1, Q2, Q3 and Q4 through modulation signals to close in an orderly manner, so as to realize the forward and reverse flow of the current, thus converting DC to AC. Among them, the four insulated gate bipolar transistors can also be replaced with other forms of controllable switches, such as thyristors, field-effect transistors, and so on.

The AC-DC conversion circuit 230 may specifically include an H-bridge formed by the four diodes, thereby converting AC to DC.

Embodiments of the present application design the DC-AC conversion circuit, the voltage transformation coupling circuit, and the AC-DC conversion circuit to form the regulation module, so that the regulation module uses the electromagnetic induction principle for energy transfer, thereby preventing the insulation problem from occurring in the first battery and the second battery.

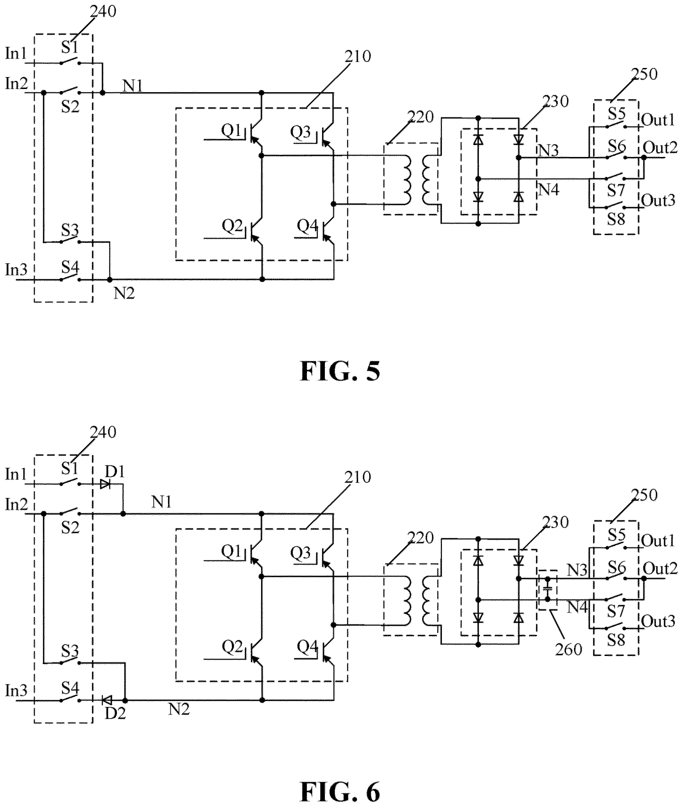

According to some embodiments of the present application, as a possible example, as shown in Fig. 5, the regulation module 20 may also include a first switching circuit 240 and a second switching circuit 250, wherein the first switching circuit 240 comprises a first switch S1, a second switch S2, a third switch S3, and a fourth switch S4, and the second switching circuit comprises a fifth switch S5, a sixth switch S6, a seventh switch S7, and an eighth switch S8, each switch being electrically connected to the control module 30. Among them, each switch may be a controllable switch, for example, a triode, a thyristor, and so on.

The first input port In1 is connected to the first input end N1 of the DC-AC conversion circuit 210 through the first switch S 1, the second input port In2 is connected to the first input end N1 of the DC-AC conversion circuit 210 through the second switch S2 and to the second input end N2 of the DC-AC conversion circuit 210 through the third switch S3, and the third input port In3 is connected to the second input N2 of the DC-AC conversion circuit through the fourth switch S4.

The output end of the DC-AC conversion circuit 210 is connected to one side of the voltage transformation coupling circuit 220, and the other side of the voltage transformation coupling circuit 220 is connected to the AC-DC conversion circuit 230; the first output end N3 of the AC-DC conversion circuit 230 is connected to the first output port Out1 through the fifth switch S5, and the first output end N3 of the AC-DC conversion circuit 230 is connected to the second output port Out2 through the sixth switch S6, the second output end N4 of the AC-DC conversion circuit 230 is connected to the second output port Out2 through the seventh switch S7, and the second output end N4 of the AC-DC conversion circuit 230 is connected to the third output port Out3 through the eighth switch S8.

During the regulation by the regulation module 20 designed above, the control module 30 can control the corresponding switch to close so as to realize the regulation by the regulation module 20 to regulate the power of a battery of which the state of charge is higher and then transmit it to a battery of which the state of charge is lower.

For example, when the state of charge of the first battery 110 is higher, the control module 30 can control the switches S1, S3, S6, and S8 to close, so that the DC-AC conversion circuit 210 and the first battery 110 are connected and on, and the AC-DC conversion circuit 210 and the second battery 120 are connected and on, thereby realizing the transfer of the power of the first battery 110 to the second battery 120.

Embodiments of the present application design the first switching circuit and the second switching circuit to achieve the control of the flow direction of electrical energy transmission, so that the control of transmitting energy from the battery of which the state of charge is higher to the battery of which the state of charge is lower can be achieved by a simple design.

Further, according to some embodiments of the present application, in order to prevent the flow of current in a wrong direction during the conversion of DC to AC, as show in Fig. 6, this regulation module 20 may also include a first diode D1 and a second diode D2, the first switch S1 is connected to the positive terminal of the first diode D1 and the first input end N1 of the DC-AC conversion circuit 210 is connected to the negative terminal of the first diode D1; and the fourth switch S4 is connected to the negative terminal of the second diode D2, and the second input end N2 of the DC-AC conversion circuit 210 is connected to the positive terminal of the second diode D2.

Even further, in order to filter the interference caused by DC to AC and AC to DC conversions, as shown in Fig. 6, the regulation module 20 may also include a filter circuit 260, wherein this filter circuit 260 may specifically be a filter capacitor C1, thereby filtering the converted DC current, and then transmitting it to the battery of which the state of charge is lower.

In this embodiment, this solution designs the diodes in the first switch and the fourth switch so as to prevent the current from flowing in the wrong direction during the DC to AC conversion process, thus improving the accuracy of the DC to AC conversion and preventing the current from flowing back, and designs the filter circuit to filter the converted DC current, so as to eliminate the interference caused during DC to AC and AC to DC conversion processes.

According to some embodiments of this solution, as described earlier, this solution can not only transfer the energy from the battery of which the state of charge is higher to the battery of which the state of charge is lower, but also transfer the overall energy of the battery module 10 to the battery of which the state of charge is lower, thus realizing the regulation of the states of charge.

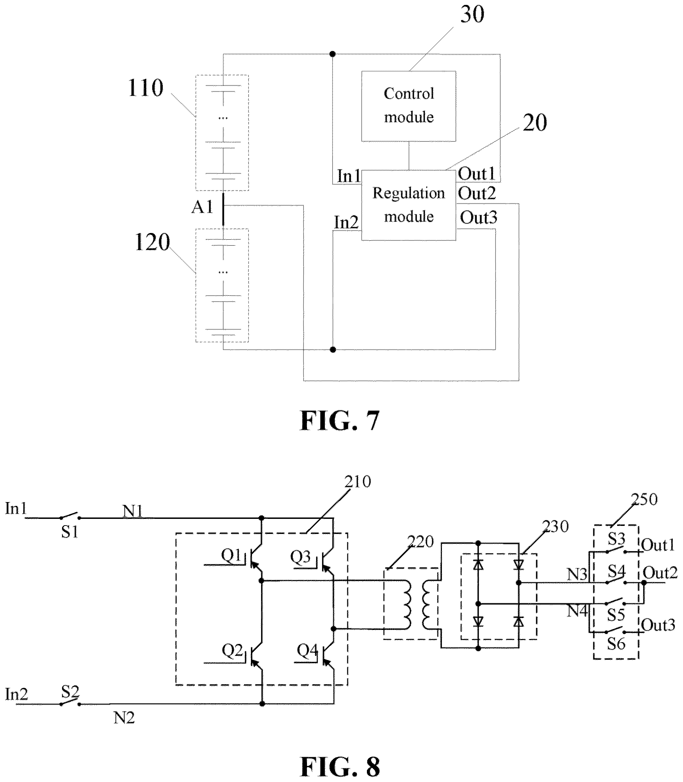

On the above basis, as shown in Fig. 7, the regulation module 20 designed in this solution comprises a first input port In1, a second input port In2, a first output port Out1, a second output port Out2, and a third output port Out3; and the first input port In1 and the first output port Out1 are connected to the first end (positive electrode) of the first battery 110, and the second input port In2 and third output port Out3 are connected to the second end (negative electrode) of the second battery 120, and the second output port Out2 is connected to the series connection end A1.

The regulation module 20 designed above can, under the control of the control module 30, regulate the power of the battery module 10 and then transmit it to the battery of which the state of charge is lower.

For example, in accordance with the structure shown in Fig. 7, when the state of charge of the first battery 110 is lower compared to the state of charge of the second battery 120, the control module 30 controls the first input port In1, the second input port In2, the first output port Out1, and the second output port Out2 of the regulation module 20 to be on, so that the overall power of the battery module 10 is transmitted to the regulation module 20 through the first input port In1 and the second input port In2 for adjustment and conversion and then transmitted to the first battery 110 through the first output port Out1 and the second output port Out2, so that the state of charge of the first battery 110 gradually increases, thus causing the states of charge of the first battery 110 and the second battery 120 tend to be consistent or to have a difference within a preset range, so as to complete the regulation.

For another example, in accordance with the structure shown in Fig. 7, when the state of charge of the second battery 120 is lower compared to the state of charge of the first battery 110, the control module 30 controls the first input port In1, the second input port In2, the second output port Out2, and the third output port Out3 of the regulation module 20 to be on, so that the overall power of the battery module 10 is transmitted to the regulation module 20 through the first input port In1 and the second input port In2 for adjustment and conversion and then transmitted to the second battery 120 through the second output port Out2 and the third output port Out3, so that the state of charge of the first battery 120 gradually increases, thus causing the states of charge of the first battery 110 and the second battery 120 tend to be consistent or to have a difference within a preset range, so as to complete the regulation.

Embodiments of the present application design the first input port and the first output port of the regulation module to be connected to the first end of the first battery, the second input port and the third output port of the regulation module to be connected to the second end of the second battery, and the third output port of the regulation module to be connected to the series connection end, so that the designed regulation module can, under the control of the control module, regulate the overall electrical energy of the battery module and then transmit it to a battery of which the state of charge is lower, so that the states of charge of the first battery 110 and the second battery 120 tend to be consistent or differ in a preset range.

According to some embodiments of this solution, as a specific implementation, based on the principle shown in Fig. 7, as shown in Fig. 8, the designed regulation module 20 may also include the DC-AC conversion circuit 210, the voltage transformation coupling circuit 220, the AC-DC conversion circuit 230, the first switching circuit 240, and the second switching circuit 250, but the difference is that, in this implementation, the first switching circuit contains only the first switch S 1 and the second switch S2, and the second switching circuit 250 contains the third switch S3, the fourth switch S4, the fifth switch S5, and the sixth switch S6, the first input port In1 is connected to the first input end N1 of the DC-AC conversion circuit 210 through the first switch S1, and the second input port In2 is connected to the second input end N2 of the DC-AC conversion circuit 210 through the second switch S2.

The output end of the DC-AC conversion circuit 210 is connected to one side of the voltage transformation coupling circuit 220, and the other side of the voltage transformation coupling circuit 220 is connected to the AC-DC conversion circuit 230; the first output end N3 of the AC-DC conversion circuit 230 is connected to the first output port Out1 through the third switch S3, and the first output end N3 of the AC-DC conversion circuit 230 is connected to the second output port Out2 through the fourth switch S4, the second output end N4 of the AC-DC conversion circuit 230 is connected to the second output port Out2 through the fifth switch S5, and the second output end N4 of the AC-DC conversion circuit 230 is connected to the third output port Out3 through the sixth switch S6.

During the regulation by the regulation module 20 designed above, the control module 30 can control the corresponding switch to close so as to realize the regulation by the regulation module 20 to regulate the overall power of the battery module and then transmit it to a battery of which the state of charge is lower.

For example, when the state of charge of the first battery 110 is lower, the control module 30 can control the switches S1, S2, S3, and S5 to close, so that the DC-AC conversion circuit 210 and the battery module 10 are connected and on, and the AC-DC conversion circuit 210 and the first battery 110 are connected and on, thereby realizing the transfer of the overall power of the battery module 10 to the first battery 110. It is noted here that the DC-AC conversion circuit 210, the voltage transformation coupling circuit 220, and the AC-DC conversion circuit 230 in this embodiment have the same functions as those described previously and will not be repeated here.

Embodiments of the present application design the first switching circuit and the second switching circuit to achieve the control of the flow direction of electrical energy transmission, so that the control of transmitting the overall energy from the battery module to the battery of which the state of charge is lower can be achieved by simple design.

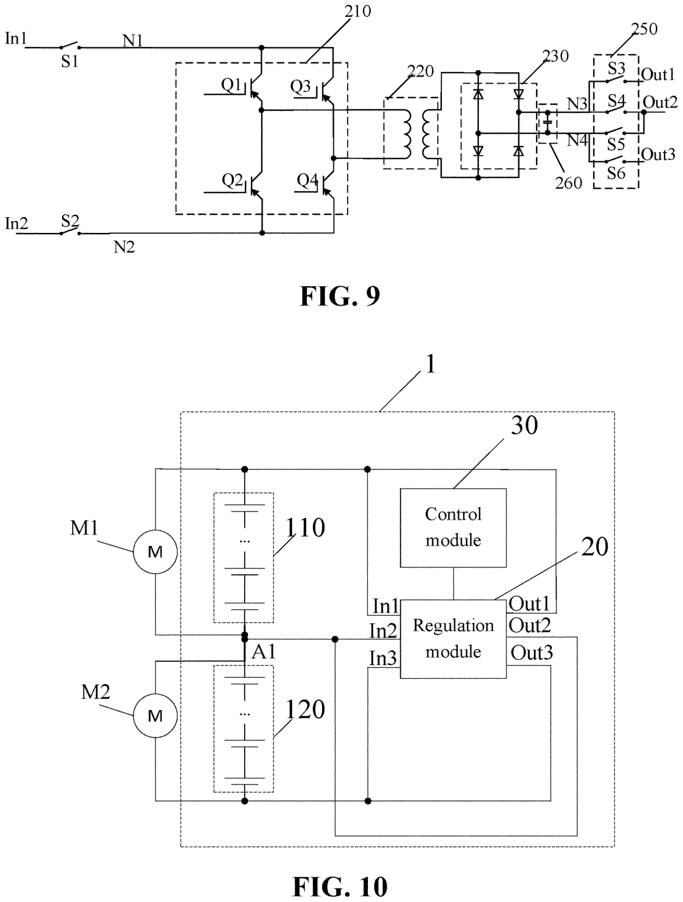

According to some embodiments of the present application, similarly, the circuit structure shown in Fig. 8 of this embodiment is as shown in Fig. 9, the regulation module 20 may also contain the filter circuit 260, so as to filter the interference generated by DC to AC and AC to DC conversions.

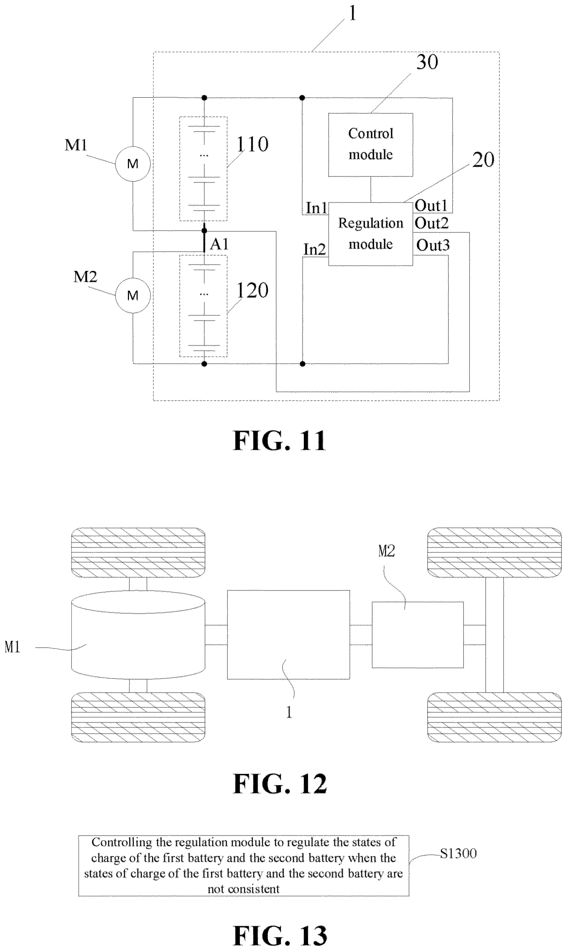

The present application provides a vehicle power system. As shown in Fig. 10 and Fig. 11, this vehicle power system comprises a first motor M1, a second motor M2, and a battery regulation system 1 described in any of the preceding optional embodiments, wherein the first battery 110 is connected to the first motor M1 to power the first motor M1, and the second battery 120 is connected to the second motor M2 to power the second motor M2.

In the vehicle power system designed above, this solution designs a battery module, a regulation module, and a control module to form a battery regulation system of this power system, wherein the control module can control the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the vehicle power system.

The present application provides an electrical device. As shown in Fig. 12, this electrical device may comprise a vehicle, the vehicle comprising the battery regulation system described previously, wherein the first motor M1 is used for driving the front wheels of the vehicle, and the second motor M2 is used for driving the rear wheels of the vehicle. Among other things, this electrical device may also include other types of electrical devices, such as ships, spaceships, and the like.

The electrical device designed above comprises a battery regulation system, wherein the control module in the battery regulation system can control the regulation module to regulate the states of charge of the first battery and the second battery when the states of charge of the first battery and the second battery in the battery module are not consistent, so that the SOCs of the two batteries remain consistent or have a small difference, thus allowing the battery module to fully complete power outputting or substantially reach the fully charged state, thereby improving the range of the vehicle.

The present application provides a regulation method, wherein the regulation method can be applied to the aforementioned battery regulation system, and the regulation method can be performed by the control module in the aforementioned battery regulation system. As shown in Fig. 13, the regulation method comprises:

Step S 1300: controlling the regulation module to regulate the states of charge of the first battery and the second battery when the states of charge of the first battery and the second battery are not consistent.

In the above implementation, the control module can collect the states of charge of the first battery and the second battery to judge whether the states of charge of the first battery and the second battery are consistent, wherein the specific judgment method has been described above and will not be repeated here.

The control module controls the regulation module to adjust the states of charge of the first battery and the second battery, so that the states of charge of the first battery and the second battery are the same or has a difference within a preset range, thus allowing the battery module to fully complete power outputting or substantially reach the fully charged state, thereby improving the range of the vehicle power system. Among other things, the specific regulation method has been described above and will not be repeated here.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. A battery regulation system, wherein the battery regulation system is applied to an electrical device comprising a first motor and a second motor; and the battery regulation system comprises a battery module, a regulation module, and a control module, wherein
the regulation module is electrically connected to the battery module and the control module;
the battery module comprises a first battery and a second battery, the first battery and the second battery being connected in series, wherein the first battery is used for powering the first motor and the second battery is used for powering the second motor; and
the control module is used for controlling the regulation module to regulate the states of charge of the first battery and the second battery when the states of charge of the first battery and the second battery are not consistent.

2. The battery regulation system according to claim 1, wherein a second end of the first battery and a first end of the second battery form a series connection end;
the regulation module comprises a first input port, a second input port, a third input port, a first output port, a second output port, and a third output port;
the first input port and the first output port of the regulation module are connected to a first end of the first battery, the second input port and the second output port of the regulation module are connected to the series connection end, and the third input port and the third output port of the regulation module are connected to a second end of the second battery; and
the control module is used for controlling the regulation module to transmit power from a battery of which the state of charge is higher to a battery of which the state of charge is lower when the states of charge of the first battery and the second battery are not consistent.

3. The battery regulation system according to claim 2, wherein the regulation module comprises a DC-AC conversion circuit, a voltage transformation coupling circuit, and an AC-DC conversion circuit, the control module being electrically connected to the DC-AC conversion circuit;
the control module is used for transmitting a modulation signal to the DC-AC conversion circuit when the states of charge of the first battery and the second battery are not consistent, and controlling the battery of which the state of charge is higher to transmit a DC current to the DC-AC conversion circuit;
the DC-AC conversion circuit is used for converting the received DC current into a corresponding AC current according to the modulation signal and transmitting the converted AC current to the voltage transformation coupling circuit;
the voltage transformation coupling circuit is used for transmitting the converted AC current to the AC-DC conversion circuit by means of electromagnetic induction; and
the AC-DC conversion circuit is used for converting the AC current transmitted by the voltage transformation coupling circuit into a corresponding DC current to obtain the converted DC current, so as to regulate the battery of which the state of charge is lower using the converted DC current.

4. The battery regulation system according to claim 3, wherein the regulation module further comprises a first switching circuit and a second switching circuit, the control module being electrically connected separately to the first switching circuit and the second switching circuit;
the control module is used for, when the states of charge of the first battery and the second battery are not consistent, controlling the first switching circuit to close so as to control the battery of which the state of charge is higher to transmit a DC current to the DC-AC conversion circuit; and controlling the second switching circuit to close so as to transmit the converted DC current to the battery of which the state of charge is lower.

5. The battery regulation system according to claim 4, wherein the first switching circuit comprises a first switch, a second switch, a third switch, and a fourth switch; and the second switching module comprises a fifth switch, a sixth switch, a seventh switch, and an eighth switch, each switch being electrically connected to the control module;
the first input port is connected to a first input end of the AC-DC conversion circuit via the first switch, the second input port is connected to a first input end of the DC-AC conversion circuit via the second switch and connected to a second input end of the DC-AC conversion circuit via the third switch, and the third input port is connected to the second input end of the DC-AC conversion circuit via the fourth switch;
an output end of the DC-AC conversion circuit is connected to one side of the voltage transformation coupling circuit, and the other side of the voltage transformation coupling circuit is connected to the AC-DC conversion circuit; and
a first output end of the AC-DC conversion circuit is connected to the first output port via the fifth switch, and the first output end of the AC-DC conversion circuit is connected to the second output port via the sixth switch, a second output end of the AC-DC conversion circuit is connected to the second output port via the seventh switch, and the second output end of the AC-DC conversion circuit is connected to the third output port via the eighth switch.

6. The battery regulation system according to claim 5, wherein the regulation module further comprises a first diode and a second diode, the first switch is connected to the positive terminal of the first diode, and the first input end of the DC-AC conversion circuit is connected to the negative terminal of the first diode; and
the fourth switch is connected to the negative terminal of the second diode, and the second input end of the DC-AC conversion circuit is connected to the positive terminal of the second diode.

7. The battery regulation system according to claim 1, wherein a second end of the first battery and a first end of the second battery form a series connection end;
the regulation module comprises a first input port, a second input port, a first output port, a second output port, and a third output port;
the first input port and the first output port are connected to a first end of the first battery, the second input port and the third output port are connected to a second end of the second battery, and the second output port is connected to the series connection end; and
the control module is specifically used for controlling the regulation module to transmit power from the battery module to a battery of which the state of charge is lower when the states of charge of the first battery and the second battery are not consistent.

8. The battery regulation system according to claim 7, wherein the regulation module comprises a DC-AC conversion circuit, a voltage transformation coupling circuit, and an AC-DC conversion circuit, the control module being electrically connected to the DC-AC conversion circuit;
the control module is used for transmitting a modulation signal to the DC-AC conversion circuit when the states of charge of the first battery and the second battery are not consistent, and controlling the battery module to transmit a DC current to the DC-AC conversion circuit;
the DC-AC conversion circuit is used for converting the received DC current into a corresponding AC current according to the modulation signal and transmitting the converted AC current to the voltage transformation coupling circuit;
the voltage transformation coupling circuit is used for transmitting the converted AC current to the AC-DC conversion circuit by means of electromagnetic induction; and
the AC-DC conversion circuit is used for converting the AC current transmitted by the voltage transformation coupling circuit into a corresponding DC current to obtain the converted DC current, so as to regulate the battery of which the state of charge is lower using the converted DC current.

9. The battery regulation system according to claim 8, wherein the regulation module further comprises a first switching circuit and a second switching circuit, the control module being electrically connected separately to the first switching circuit and the second switching circuit;
the control module is used for, when the states of charge of the first battery and the second battery are not consistent, controlling the first switching circuit to close so as to control the battery module to transmit a DC to the DC-AC conversion circuit; and controlling the second switching circuit to close so as to transmit the converted DC current to the battery of which the state of charge is lower.

10. The battery regulation system according to claim 9, wherein the first switching circuit comprises a first switch and a second switch; and the second switching circuit comprises a third switch, a fourth switch, a fifth switch, and a sixth switch, each switch being electrically connected to the control module;
the first input port is connected to a first input end of the DC-AC conversion circuit via the first switch, and the second input port is connected to a second input end of the DC-AC conversion circuit via the second switch;
an output end of the DC-AC conversion circuit is connected to one side of the voltage transformation coupling circuit, and the other side of the voltage transformation coupling circuit is connected to the AC-DC conversion circuit; and
a first output end of the AC-DC conversion circuit is connected to the first output port via the third switch, and the first output end of the AC-DC conversion circuit is connected to the second output port via the fourth switch, a second output end of the AC-DC conversion circuit is connected to the second output port via the fifth switch, and the second output end of the AC-DC conversion circuit is connected to the third output port via the sixth switch.

11. An electrical device of any one of claims 1-10, the electrical device comprising a vehicle, the vehicle comprising the battery regulation system.

12. A battery regulation method, wherein the battery regulation method is applied to a battery regulation system, the battery regulation system comprising a battery module, a regulation module, and a control module, wherein the regulation module is electrically connected to the battery module and the control module; the battery module comprises a first battery and a second battery, the first battery and the second battery being connected in series, wherein the first battery is used for powering the first motor and the second battery is used for powering the second motor, and the method is performed by the control module, comprising:
controlling the regulation module to regulate the states of charge of the first battery and the second battery when the states of charge of the first battery and the second battery are not consistent.
